# EUROPEAN PATENT SPECIFICATION

(11) **EP 2 128 474 B1**
(45) Date of publication and mention of the grant of the patent: **07.09.2011**
(21) Application number: 08425328.5
(22) Date of filing: 12.05.2008
(51) Int. Cl.: F16D 59/02

(54) **Braking assembly for rotating shafts**
Bremsanordnung für Drehwellen
Ensemble de freinage pour arbres de rotations

(43) Date of publication of application: 02.12.2009
(73) Proprietor: Alberto Sassi S.P.A, 40056 Crespellano (Bologna) (IT)
(72) Inventor: Berselli, Umberto, 40017 San Giovanni in Persiceto (BO) (IT)
(74) Representative: Modiano, Micaela Nadia

(56) References cited:
- EP-A- 0 953 786
- DE-A1- 3 424 595
- DE-A1- 19 733 169
- US-B1- 6 202 804

## Description

The present invention relates to a braking assembly for rotating shafts as for instance known from DE-A-197 33 169 which is adapted to provide service and/or safety brakes, which can be coupled to any rotating shaft associated with machines of any kind, such as electric, hydraulic, pneumatic motors and/or heat engines, and for any type of application.

It is known to adopt brakes of the electromagnetic type in which a fixed body made of ferromagnetic material is kept separate and spaced from a corresponding rotating member (provided with a surface made of material with high surface friction which lies proximate to at least one surface portion of the fixed body) as a consequence of the magnetic attraction applied by an electromagnet. Elastic elements instead force the fixed body against the surface of the rotating member: the magnetic attraction of the electromagnet keeps the fixed body in a retracted position, with the elastic elements in a deformed configuration, in order to maintain a preset distance between the fixed body and the rotating member.

Since the rotating member is jointly connected to the rotating shaft, in the configuration for correct activation of the electromagnet the shaft can rotate freely.

If the electromagnet is not powered, the elastic elements will be arranged in their inactive (non-deformed) configuration, producing a translational motion of the fixed body toward the rotating member until the face of the fixed body rests, with elastic forcing, against the corresponding surface of the rotating member, producing a braking of the rotating member and of the rotating shaft jointly connected thereto.

The implementation of the braking assemblies (understood as the increase in the braking torque performance required of the brake as a whole in some particular applications) provides for the mounting of a plurality of brakes which act simultaneously on a same rotating shaft. Even assuming that a respective brake is arranged at the two ends of the shaft (an installation condition which further often already entails space occupation problems), the total braking torque may be insufficient to perform the particular service.

In this case, it is necessary to arrange multiple brakes in sequence (in series) on the shaft: in this case, the overall space occupation is practically always excessive and entails severe drawbacks in the logistics of the system.

In the particular field of lifting machines (such as elevators, goods elevators and lifters) there is also the need to have a double braking assembly: this need is dictated by the requirement of maximum safety of the system. Even in case of failure of one of the two brakes, the other one will be efficient and will allow safety braking of the system in accordance to the prescriptions of statutory provisions.

The aim of the present invention is to provide a braking assembly for rotating shafts which is of a universal type and has a minimal space occupation.

Within this aim, an object of the present invention is to provide a braking assembly for rotating shafts of the modular type, which is suitable for discrete increase in braking torque while maintaining minimal space occupation.

Another object of the present invention is to provide a braking assembly for rotating shafts which is constituted by contiguous portions, each having a respective braking action which is independent of the others.

Another object of the present invention is to provide a braking assembly for rotating shafts which has low costs, is relatively simple to provide in practice and is safe in application.

This aim and these and other objects, which will become better apparent hereinafter, are achieved by the present braking assembly for rotating shafts as defined in claim 1.

Further characteristics and advantages of the invention will become better apparent and evident from the following detailed description of a preferred but not exclusive embodiment of a braking assembly for rotating shafts, illustrated by way of non-limiting example in the accompanying drawings, wherein:

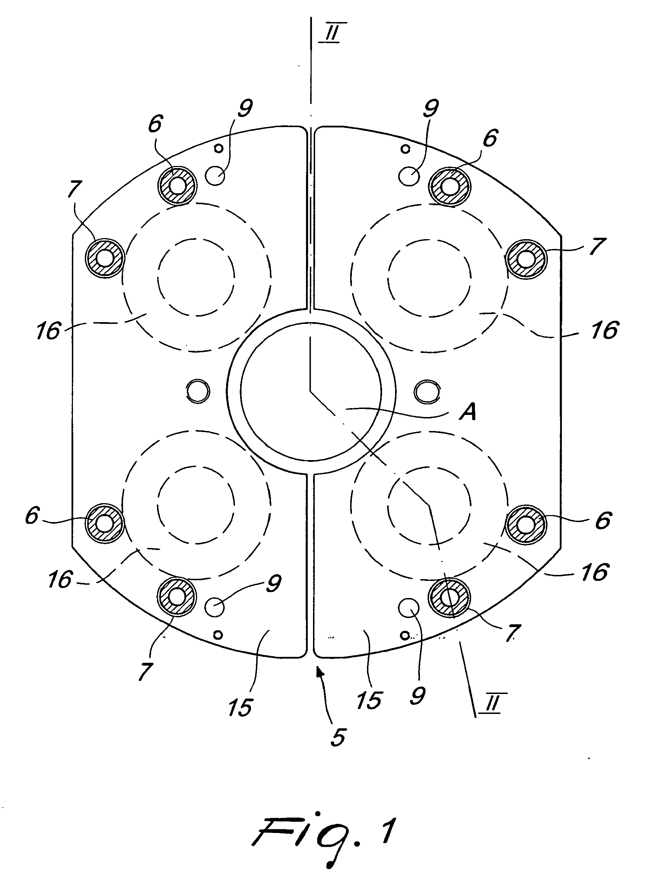

Figure 1 is a front view of a portion of a braking assembly for rotating shafts according to the invention;

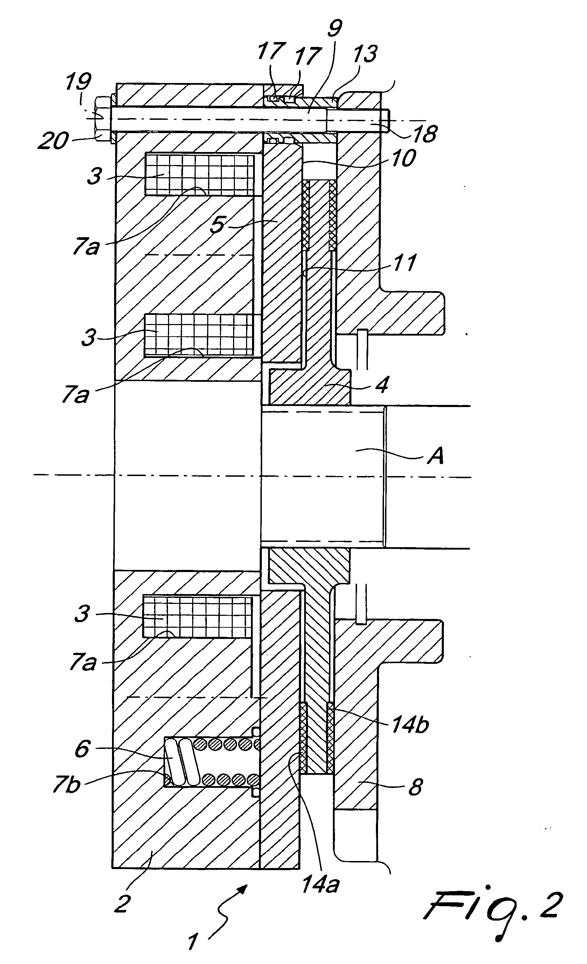

Figure 2 is a sectional side view, taken along the line II-II of Figure 1, of a braking assembly for rotating shafts not forming part of the invention;

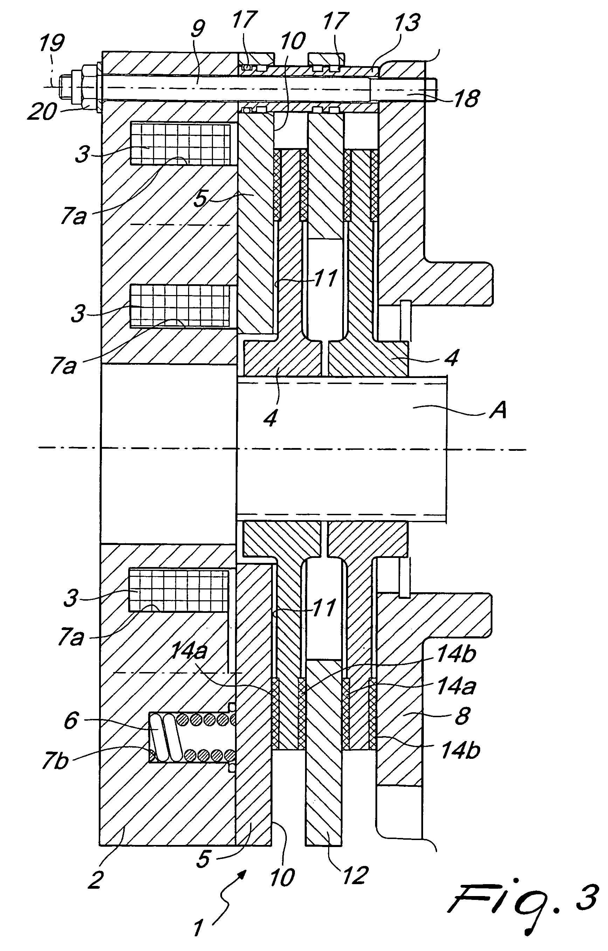

Figure 3 is a sectional side view, taken along the line II-II, of a first embodiment of a braking assembly for rotating shafts according to the invention;
Figure 4 is a sectional side view, taken along the line II-II, of a second embodiment of a braking assembly for rotating shafts according to the invention.

With reference to the figures, the reference numeral 1 generally designates a braking assembly for rotating shafts A.

The braking assembly 1 comprises a fixed main body 2, which accommodates a respective electromagnetic circuit 3, a rotating element 4, which is jointly connected to the shaft A, and a fixed braking member 5 made of ferromagnetic material, which is interposed between the main body 2 and the rotating element 4.

The magnetic attraction produced by the respective circuit 3 with respect to the braking member 5 entails the elastic deformation of elastic means 6 which are interposed between the main body 2 and the braking member 5 for the separation of the fixed braking member 5 from the rotating element 4. The elastic means 6 are adapted to force the braking member 5 against the rotating element 4, locking it in the absence of a magnetic field.

In order to ensure the establishment of a suitable magnetic field, the main body 2 (as well as the braking member 5) is made of ferromagnetic material.

According to the embodiment shown in the accompanying figures, the circuit 3 is accommodated within suitable recesses 7a which are appropriately shaped and are provided within the main body 2.

In particular, the braking assembly 1 comprises at least two rotating elements 4: the possibility to adopt multiple rotating elements 4 allows to obtain different values of braking torque of the assembly 1.

The fixed main body 2 is coupled to an end dome 8, which is arranged downward of the last rotating element 4 provided on the assembly 1.

The braking member 5 can perform a translational motion on suitable guiding stems 9, which are jointly connected, in an upper region, to the fixed main body 2 and, in a lower region, to the dome 8.

The braking member 5 performs a translational motion on the stems 9, as a consequence of forcing of the elastic means 6 and as a consequence of the magnetic action induced by the electromagnetic circuit 3, from a first extreme configuration, for separating its face 10 with respect to the at least one surface 14a of the at least two rotating elements 4 (this first configuration occurs when the electromagnetic action induced by the circuit 3 applies to the braking member 5 a force which is greater than the elastic force applied by the elastic means 6 and therefore keeps them in a deformed configuration within respective receptacles 7b), to a second extreme configuration, for mutual forced contact of the face 10 against the surface 14a of the at least one rotating element 4 (this second configuration occurs when the electromagnetic action ceases because the circuit 3 is not powered and the elastic means 6 force the braking member 5 against the corresponding rotating element 4).

In order to ensure that the electromagnetic action induced by the circuit 3 does not affect the rotating elements 4, it is convenient to make such elements of non-ferromagnetic material, therefore adopting paramagnetic and diamagnetic materials: the adoption of aluminum has proved to be particularly interesting in terms of practice and in application, since it allows to contain weights while maintaining excellent mechanical properties.

In embodiments which adopt at least two contiguous rotating elements 4, it is necessary to interpose a plate 12.

Each one of the plates 12 also is engaged on the guiding stems 9, which thus prevent its rotation, and can perform a translational motion thereon. The material of which the plates 12 are made is of the non-ferromagnetic type.

Along each one of the stems 9, interposed between the main body 2 and the dome 8, there is at least one respective spacer 13 whose height is substantially equal to the sum of the interposed components. The presence of the spacer 13 conveniently allows to determine the appropriate plays between the components that constitute the assembly 1.

Solutions which provide for the use of multiple spacers 13 interposed between the body 2 and the first plate 12 which faces it or interposed between two consecutive plates 12 or again between the last plate 12 and the dome 8 are not excluded and are in any case within the scope of the appended claims.

The mutually opposite surface portions 14a, 14b of surfaces 11 of the at least one rotating element 4 have high surface friction. Since they have to mate during braking with the braking member 5 and with the plates 12, or with the dome 8, ensuring maximum mutual grip (required to brake the rotation of the shaft A), it is convenient that the surface portions 14a, 14b be made of a material with high surface friction: the material can be applied and/or variously fixed either on the braking member 5 or on the rotating element 4 and/or on the plates 12.

The braking member 5 is constituted by at least two side-by-side plates 15, which can move independently with respect to each other and with respect to the stems 9 as a consequence of the forcing of respective elastic means 6 and of the magnetic action induced by the electromagnetic circuit 3.

This constructive solution ensures the effectiveness of the braking assembly 1 even if one of the two plates 15 jams (for any reason) and therefore cannot follow the preset stroke and therefore cannot contribute to the braking of the rotating shaft A.

In this case, in fact, the other plate 15 can freely perform a translational motion on the respective stems 9 and therefore apply a braking action if the electric power supply of the circuit 3 ceases and the force applied by the elastic means 6 pushes it toward the rotating element 4.

This constructive solution further complies with the indications of statutory provisions for the lift and elevator sector, in which the mechanical components of the braking apparatuses must be at least duplicated and mutually independent.

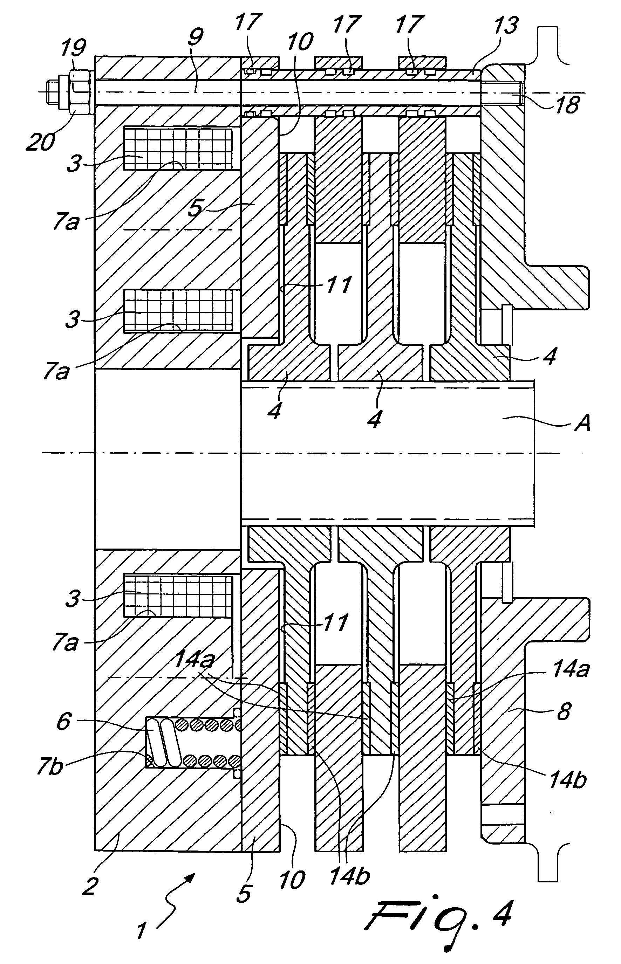

Of course, it is possible to provide any number of plates 15, modulating at will the overall braking action: in this case, the only limit is linked to the constructive complexity that corresponds to the adoption of more than four plates 15. According to the embodiment shown in Figure 4, it can in fact be noted that even by adopting four plates 15 it would be possible to ensure that each plate 15 is aligned with a respective electrical winding 16 of the circuit 3; operation would therefore be simple and at the same time the practical embodiment would not entail any structural complication.

More particularly, from a constructive standpoint, the electromagnetic circuit 3 comprises at least one electrical winding 16 which is crossed by current and is distributed on the surface of the main body 2: the choice to locate the windings 16 in different points of the body 2 is due to the intention to simplify the overall structure (each electrical winding 16 constitutes an electromagnet).

The possibility to adopt a single winding 16 which is shaped conveniently or any number of windings 16 having any cross-section is in fact not excluded: the choice to have four windings 16 substantially with a circular cross-section is dictated by the clear and evident need to simplify the structure as much as possible while ensuring maximum functionality and the best distribution of the lines of force of the magnetic field.

Units 17 with high slidability and low friction (for example sliding bearings) are interposed between the spacers 13 and the braking member 5, as well as between such spacers and the plates 12, in order to facilitate the sliding of the braking member 5 and of the plates 12 on the spacers 13.

The stems 9 have threaded ends.

A back end 18 of each stem 9 can engage within a corresponding threaded seat of the dome 8, with a coupling which can be of the stud bolt type, and a front end 19 protrudes from the main body 2, on the opposite side with respect to the one that faces the dome 8, and is coupled to a respective locking nut 20, preferably of the self-locking type.

It has been found, therefore, that it is possible to provide a braking assembly 1 which can be coupled to various machines (motors, gearmotors, et cetera) with highly variable speed and torque characteristics, using for the assembly 1, in the various applications in which the required braking torque varies and therefore the number of plates 12 provided and the number of rotating elements 4 vary, the largest number of common components, thus reducing the number of parts in use, especially those of higher value.

This ensures a cost reduction due to the larger number being manufactured and also a minimization of the quantities of reserves in stock.

The constructive architecture of the braking assembly 1 according to the invention also minimizes space occupations, especially in a longitudinal direction and, for any applications in the field of elevators and lifts in general, complying with the requirements of the relevant directives and statutory provisions and also limiting the weight of the entire assembly 1.

The braking assembly 1 according to the invention has, as described extensively in the preceding paragraphs, a modularity of the braking components which allows conveniently to double (or triple or multiply) the braking torque simply by doubling (or triplicating or multiplying) the rotating elements 4 without requiring an increase in the engaged electric power, with further advantages in terms of space occupation and costs as well as in energy efficiency.

The proposed solution in fact shows that in order to obtain the assemblies 1 with double or triple braking or, by extension, multiple braking, the longitudinal space occupation increases correspond only to the thickness of the added rotating elements 4 and plates 12 and do not entail, for example, the multiplication of the electromagnetic circuits 3.

The advantage of the reduction of the weight of the invention is also evident. A further reduction in longitudinal space occupation, a highly important characteristic for obvious reasons of easier installation, can be obtained by using high-strength materials for the rotating elements 4 and for the plates 12, further containing the moments of inertia.

Suitable materials are, according to a possible embodiment, aluminum alloys for pressing: by adopting these materials it is possible to obtain very short hub lengths and also a certain overall weight reduction.

Finally, as regards the specific use in the field of elevators and lifts, whose statutory provisions require the mechanical part of the braking system to be practically duplicated, it should also be noted that it is possible to provide the braking member 5 by using multiple plates 15. In Figure 4 it can be seen that this braking member 5 is divided symmetrically into two distinct parts, thus complying with the requirements of statutory provisions.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A braking assembly (1) for rotating shafts (A), comprising: a fixed main body (2) arranged at a first end of the assembly (1) and which accommodates a respective electromagnetic circuit (3); at least a first and a second rotating elements (4), which are jointly connected to a shaft (A); a rotationally fixed braking member (5) made of ferromagnetic material, which is interposed between said main body (2) and said two rotating elements (4); elastic means (6) which are interposed between said main body (2) and said braking member (5) and are adapted to force said braking member (5) onto said rotating elements (4) for locking them in the absence of magnetic field, said elastic means (6) being further adapted to undergo elastic deformation under a magnetic attraction produced by the respective electromagnetic circuit (3) with respect to the braking member (5) such as to allow separation of said braking member (5) from said rotating elements (4); an end dome (8) arranged at a second, opposite end of the assembly (1) and coupled to said main body (2) by way of guiding stems (9) which are jointly connected, at a first region thereof, to said fixed main body (2) and, at a second, opposite region thereof, to said dome (8); and at least one plate (12) that is interposed between said at least first and second rotating elements (4) and is engaged on said guiding stems (9) so as to be jointly connected thereto, the rotating elements (4) being arranged interposed between said main body and end dome (8) with said plate (12) interposed therebetween, said braking member (5) being able to perform a translational motion on said stems (9) as a consequence of the force action exerted by said elastic means (6) and, respectively, of the magnetic action induced by said electromagnetic circuit (3), from a first extreme configuration for separating its face (10) with respect to the surface (14a) of one of said rotating elements (4) to a second extreme configuration for mutual forced contact of said face (10) of the braking member (5) against said surface (14a) of one of said rotating elements (4), **characterized in that** said plate (12) is slidingly engaged on said guiding stems (9) so as to perform translational motions thereon, along with said rotating elements (4), both following to said translational motions of said braking element (5) due to the force action exerted by said elastic means (6) in the absence of magnetic field and following to the magnetic action induced by said electromagnetic circuit (3).

2. The braking assembly (1) according to claim 1, **characterized in that** at least one respective spacer (13) is provided along each one of said stems (9) and is interposed between said fixed main body (2) and said dome (8), its thickness being substantially equal to the thickness of the sum of the interposed components.

3. The braking assembly (1) according to claim 1, **characterized in that** mutually opposite surface portions (14a, 14b) of the surfaces (11) of the rotating elements (4) are provided so as to have high surface friction.

4. The braking assembly (1) according to any of the claims 1-3, **characterized in that** said braking member (5) is constituted by at least two plates (15) which face each other and are movable independently, each with respect to at least one other one, and with respect to the stems (9) as a consequence of the forcing of respective elastic means (6) and the magnetic action induced by said electromagnetic circuit (3).

5. The braking assembly (1) according to one of the preceding claims, **characterized in that** said electromagnetic circuit (3) comprises at least one electrical winding (16) which is crossed by current and is distributed superficially on said main body (2).

6. The braking assembly (1) according to claim 5, **characterized in that** said electrical windings (16) are at least two, each facing at least one respective plate (15) which constitutes said braking member (5).

7. The braking assembly (1) according to one of the preceding claims, **characterized in that** units (17) with high slidability and low friction are interposed between said stems (9) and said braking member (5) and between said stems (9) and said at least one plate (12) in order to facilitate the sliding of the braking member (5) and of the plate (12) on the stems (9).

8. The braking assembly (1) according to one of the preceding claims, **characterized in that** said stems (9) have threaded ends, the back end (18) of each stem (9) being engageable within a corresponding threaded seat of said dome (8), with an optional coupling of the stud bolt type, and the front end (19) protruding from said main body (2), on the opposite side with respect to the side that faces said dome (8), and being coupled to a respective locking nut (20).

9. A braking assembly (1) for rotating shafts (A) as set forth in any of the claims 1-8, **characterized in that** it comprises a plurality of rotating elements (4) and plates (12) that are interposable between adjacent ones of said rotating elements (4), said rotating elements (4) and interposable plates (12) being mountable in variable number between said fixed main body (2) and said end dome (8) so as to obtain different values of the braking torque.

## Patentansprüche

1. Bremsanordnung (1) für Drehwellen (A), welche enthält: einen festgelegten Hauptkörper (2), welcher an einem ersten Ende von der Anordnung (1) angeordnet ist, und welcher eine jeweilige elektromagnetische Schaltung (3) unterbringt; zumindest ein erstes und ein zweites Drehelement (4), welche gemeinsam an einer Welle (A) verbunden sind; ein drehfestes Bremselement (5), welches aus einem ferromagnetischen Material erstellt ist, welches zwischen dem Hauptkörper (2) und den zwei Drehelementen (4) zwischengesetzt ist; elastische Elemente (6), welche zwischen dem Hauptkörper (2) und dem Bremselement (5) zwischengesetzt sind und welche dazu ausgelegt sind, das Bremselement (5) auf die Drehelemente (4) zu zwängen, um sie bei einem Ausbleiben eines magnetischen Feldes zu verriegeln, wobei die elastischen Elemente (6) ferner dazu ausgelegt sind, sich bei einer magnetischen Anziehung, welche durch die jeweilige elektromagnetische Schaltung (3) mit Bezug auf das Bremselement (5) erzeugt wird, einer elastischen Verformung zu unterziehen, um somit eine Trennung des Bremselements (5) von den Drehelementen (4) zu erlauben; eine Endhaube (8), welche an einem zweiten, gegenüberliegenden Ende von der Anordnung (1) angeordnet ist und mittels Führungsschäften (9), welche gemeinsam verbunden sind, an dem Hauptkörper (2) gekoppelt ist, und zwar an einem ersten Bereich davon mit dem festgelegten Hauptkörper (2) und an einem zweiten, gegenüberliegenden Bereich davon mit der Haube (8); und zumindest einer Platte (12), welche zwischen dem zumindest einen ersten und zweiten Drehelement (4) zwischengesetzt ist und auf den Führungsschäften (9) in Eingriff steht, um somit gemeinsam damit verbunden zu sein, wobei die Drehelemente (4) zwischen dem Hauptkörper und der Endhaube (8) zwischengesetzt angeordnet sind, wobei die Platte (12) dazwischengesetzt ist, wobei das Bremselement (5) dazu in der Lage ist, eine Parallelverschiebung auf den Schäften (9) durchzuführen, und zwar resultierend aus der Kraft, welche durch die elastischen Elemente (6) ausgeübt wird, und jeweils aus der Magnetwirkung, welche durch die elektromagnetische Schaltung (3) induziert wird, von einem ersten übertriebenen Aufbau zum Trennen seiner Fläche (10) mit Bezug auf die Oberfläche (14a) von einem von den Drehelementen (4), zu einem zweiten übertriebenen Aufbau zum wechselseitig erzwungenen Kontakt von der Fläche (10) des Bremselements (5) gegen die Oberfläche (14a) von einem von den Drehelementen (4), **dadurch gekennzeichnet, dass** die Platte (12) gleitbar auf den Führungsschäften (9) in Eingriff steht, um somit Parallelverschiebungen darauf zusammen mit den Drehelementen (4) durchzuführen, und zwar sowohl den Parallelverschiebungen von dem Bremselement (5) aufgrund der Kraft, welche durch das elastische Element (6) beim Ausbleiben des magnetischen Feldes ausgeübt wird, folgend, als auch der magnetischen Wirkung, welche durch die elektromagnetische Schaltung (3) induziert wird, folgend.

2. Bremsanordnung (1) nach Anspruch 1, **dadurch gekennzeichnet, dass** zumindest ein jeweiliger Abstandshalter (13) entlang von jedem von den Schäften (9) bereitgestellt ist und zwischen dem fixierten Hauptkörper (2) und der Haube (8) zwischengesetzt ist, wobei dessen Dicke im Wesentlichen gleich der Dicke der Summe der zwischengesetzten Bauteile ist.

3. Bremsanordnung (1) nach Anspruch 1, **dadurch gekennzeichnet, dass** wechselseitig gegenüberliegende Oberflächenabschnitte (14a, 14b) von den Oberflächen (11) von den Drehelementen (4) derart bereitgestellt sind, dass sie eine hohe Oberflächenreibung haben.

4. Bremsanordnung (1) nach einem der Ansprüche 1 bis 3, **dadurch gekennzeichnet, dass** das Bremselement (5) durch zumindest zwei Platten (15) aufgebaut ist, welche zueinander gegenüberliegen und jeweils mit Bezug zueinander und mit Bezug zu den Schäften (9) unabhängig bewegbar sind, resultierend aus der Kraft der jeweiligen elastischen Elemente (6) und der magnetischen Wirkung, welche durch die elektromagnetische Schaltung (3) induziert wird.

5. Bremsanordnung (1) nach einem der vorhergehenden Ansprüche, **dadurch gekennzeichnet, dass** die elektromagnetische Schaltung (3) zumindest eine elektrische Wicklung (16) enthält, welche durch Strom gekreuzt ist und oberflächlich auf dem Hauptkörper (2) verbreitet ist.

6. Bremsanordnung (1) nach Anspruch 5, **dadurch gekennzeichnet, dass** die elektrischen Wicklungen (16) zumindest zwei enthalten, welche jeweils einer jeweiligen Platte (15) gegenüberliegen, welche das Bremselement (5) bildet.

7. Bremsanordnung (1) nach einem der vorhergehenden Ansprüche, **dadurch gekennzeichnet, dass** Einheiten (17) mit einer hohen Gleitfähigkeit und einer geringen Reibung zwischen den Schäften (9) und dem Bremselement (5), und zwischen den Schäften (9) und der zumindest einen Platte (12) zwischengesetzt sind, um das Gleiten des Bremselements (5) und von der Platte (12) auf den Schäften (9) zu unterstützen.

8. Bremsanordnung (1) nach einem der vorhergehenden Ansprüche, **dadurch gekennzeichnet, dass** die Schäfte (9) Gewindeenden haben, wobei das rückseitige Ende (18) von jedem Schaft (9) mit einem entsprechenden Gewindeeinsatz von der Haube (8) in Eingriff bringbar ist, und zwar mit einer optionalen Kopplung eines Gewindebolzen-Typs, und wobei das vorderseitige Ende (19) an der gegenüberliegenden Seite mit Bezug auf jene Seite, welche der Haube (8) gegenüberliegt, von dem Hauptkörper (2) vorragt und mit einer entsprechenden Verriegelungs-Gewindemutter (20) koppelbar ist.

9. Bremsanordnung (1) für Drehwellen (A) nach einem der Ansprüche 1 bis 8, **dadurch gekennzeichnet, dass** sie eine Mehrzahl von Drehelementen (4) und Platten (12) enthält, welche zwischen angrenzenden der Drehelemente (4) einfügbar sind, wobei die Drehelemente (4) und einfügbaren Platten (12) in variabler Anzahl zwischen dem festgelegten Hauptkörper (2) und der Endhaube (8) befestigbar sind, um unterschiedliche Brems-Drehmoment-Werte zu erlangen.

## Revendications

1. Ensemble de freinage (1) pour arbres de tournants (A), comprenant : un corps principal fixe (2) disposé à une première extrémité de l'ensemble (1) et qui contient un circuit électromagnétique respectif (3) ; au moins un premier et un second éléments rotatifs (4), qui sont respectivement accouplés avec un arbre (A) ; un élément de freinage (5) non rotatif, en matière ferromagnétique, qui est intercalé entre ledit corps principal (2) et lesdits deux éléments rotatifs (4) ; des moyens élastiques (6) qui sont intercalés entre ledit corps principal (2) et ledit élément de freinage (5) et sont conçus pour pousser ledit élément de freinage (5) sur lesdits éléments rotatifs (4) afin de les bloquer en l'absence de champ magnétique, lesdits moyens élastiques (6) étant en outre conçus pour subir une déformation élastique sous l'effet d'une attraction magnétique produite par le circuit électromagnétique respectif (3) par rapport à l'élément de freinage (5), notamment pour permettre la séparation dudit élément de freinage (5) d'avec lesdits éléments rotatifs (4) ; un dôme (8) d'extrémité disposé à une seconde extrémité, opposée, de l'ensemble (1) et accouplé avec ledit corps principal (2) au moyen de tiges de guidage (9) qui sont solidaires, dans une première région de celles-ci, dudit corps principal fixe (2) et, dans une seconde région opposée de celles-ci, dudit dôme (8) ; et au moins une plaque (12) qui est intercalée entre lesdits au moins premier et second éléments rotatifs (4) et est au contact desdites tiges de guidage (9) de manière à être solidaire de celles-ci, les éléments rotatifs (4) étant intercalés entre ledit corps principal et ledit dôme (8) d'extrémité entre lesquels est intercalée ladite plaque (12), ledit élément de freinage (5) étant apte a effectuer un mouvement de translation sur lesdites tiges (9) sous l'effet de l'effort exercé par lesdits moyens élastiques (6) et, respectivement, de l'action magnétique induite par ledit circuit électromagnétique (3), depuis une première configuration extrême pour séparer sa face (10) par rapport à la surface (14a) d'un desdits éléments rotatifs (4) jusqu'à une seconde configuration extrême pour un contact mutuel forcé de ladite face (10) de l'élément de freinage (5) contre ladite surface (14a) d'un desdits éléments rotatifs (4), **caractérisé en ce que** ladite plaque (12) vient coulisser sur lesdites tiges de guidage (9) de manière à effectuer des mouvements de translation sur celles-ci, ainsi que lesdits éléments rotatifs (4), à la fois par suite desdits mouvements de translation dudit élément de freinage (5) sous l'effet de l'effort exercé par lesdits moyens élastiques (6) en l'absence de champ magnétique et par suite de l'action magnétique induite par ledit circuit électromagnétique (3).

2. Ensemble de freinage (1) selon la revendication 1, **caractérisé en ce qu'**au moins un moyen de séparation respectif (13) est disposé le long de chacune desdites tiges (9) et est intercalé entre ledit corps principal fixe (2) et ledit dôme (8), son épaisseur étant sensiblement égale à l'épaisseur de la somme des pièces intercalées.

3. Ensemble de freinage (1) selon la revendication 1, **caractérisé en ce que** des parties mutuellement opposées (14a, 14b) des surfaces (11) des éléments rotatifs (4) sont prévues de manière à avoir un grand coefficient de frottement de surfaces.

4. Ensemble de freinage (1) selon l'une quelconque des revendications 1 à 3, **caractérisé en ce** ledit élément de freinage (5) est constitué par au moins deux plaques (15) en regard l'une de l'autre et mobiles de manière indépendante, chacune par rapport à au moins l'une des autres, et par rapport aux tiges (9) sous l'effet de la poussée exercée par les moyens élastiques respectifs (6) et de l'action magnétique induite par ledit circuit électromagnétique (3).

5. Ensemble de freinage (1) selon l'une quelconque des revendications précédentes, **caractérisé en ce que** ledit circuit électromagnétique (3) comporte au moins un enroulement électrique (16) qui est parcouru par un courant et est réparti à la surface dudit corps principal (2).

6. Ensemble de freinage (1) selon la revendication 5, **caractérisé en ce que** lesdits enroulements électriques (16) sont au moins au nombre de deux, chacun en regard d'au moins une plaque respective (15) qui constitue ledit élément de freinage (5).

7. Ensemble de freinage (1) selon l'une quelconque des revendications précédentes, **caractérisé en ce que** des dispositifs (17) à grande aptitude au coulissement et petit coefficient de frottement sont intercalés entre lesdites tiges (9) et ledit élément de freinage (5) et entre lesdites tiges (9) et ladite au moins une plaque (12) afin de faciliter le coulissement de l'élément de freinage (5) et de la plaque (12) sur les tiges (9).

8. Ensemble de freinage (1) selon l'une quelconque des revendications précédentes, **caractérisé en ce que** lesdites tiges (9) ont des extrémités filetée, l'extrémité arrière (18) de chaque tige (9) pouvant se visser dans un siège fileté correspondant dudit dôme (8), avec un accouplement facultatif du type goujon, et l'extrémité avant (19) dépassant dudit corps principal (2), sur le côté opposé par rapport au côté en regard dudit dôme (8), et étant accouplée avec un écrou de blocage respectif (20).

9. Ensemble de freinage (1) pour arbres de tournants (A) selon l'une quelconque des revendications 1 à 8, **caractérisé en ce qu'**il comprend une pluralité d'éléments rotatifs (4) et de plaques (12) pouvant être intercalées entre des éléments rotatifs adjacents parmi lesdits éléments de rotatifs (4), lesdits éléments rotatifs (4) et plaques intercalables (12) pouvant se monter en nombre variable entre ledit corps principal fixe (2) et ledit dôme d'extrémité (8) de façon à obtenir différentes valeurs du couple de freinage.
